# DEMANDE DE BREVET EUROPEEN

(11) **EP 0 524 890 A1**
(43) Date de publication de la demande: **27.01.1993**
(21) Numéro de dépôt: 92402148.8
(22) Date de dépôt: 24.07.1992
(51) Int. Cl.: G05B 19/04

(54) **Appareil électroménager à programmateur à microprocesseur commandant un affichage**

(30) Priorité: 26.07.1991 FR 9109519
(71) Demandeur: ESSWEIN S.A., F-85002 La Roche-sur-Yon (FR)
(72) Inventeur: Couillaud, Philippe, F-92045 Paris la Défense (FR); Geay, Jean-Claude, F-92045 Paris la Défense (FR)
(74) Mandataire: Chaverneff, Vladimir

(57) **Abrégé**

Appareil électroménager à programmateur à microprocesseur (10) et dispositif de visualisation (11) de données se rapportant au fonctionnement de l'appareil et/ou au programme.

Le microprocesseur comporte une entrée (12, 13) pour un signal d'identification représentant le type de dispositif de visualisation (11) et une sortie (14, 15) délivrant des signaux de commande au dispositif de visualisation; ces signaux de commande sont fonction des signaux d'identification.

## Description

L'invention est relative à un appareil électroménager comportant un progrannmateur à microprocesseur.

Aujourd'hui pratiquement chaque appareil électroménager qui doit exécuter une série d'opérations présente un progrannmateur qui connmande l'exécution automatique de ces diverses opérations. Souvent ce programmateur comporte un organe électronique à microcontrôleur ou microprocesseur.

Le microcontrôleur commande en général l'affichage de données par un, ou plusieurs, dispositif(s) de visualisation.

Les données affichées par le dispositif de visualisation sont par exemple des paramètres de fonctionnement de la machine tel que le degré d'exécution du programme.

Les constructeurs d'appareils électroménagers produisent en général une gamnme d'appareils formée de plusieurs types ayant une structure générale identique mais qui diffèrent par certaines caractéristiques tels que la possibilité de programmation ou l'aspect extérieur.

Souvent on préfère que deux types différents d'appareils soient équipés de deux types différents de dispositifs de visualisation. Par exemple pour des machines simples on préférera une visualisation par simple(s) voyant(s). Lorsqu'un voyant est allumé il indique qu'une fonction est en cours d'exécution. Pour des machines ayant les plus grandes possibilités on préfère des affichages plus perfectionnés tels que des affichages en clair, par exemple du temps restant avant la fin de l'exécution du programme.

Les signaux transmis par le microprocesseur vers le dispositif de visualisation dépendent bien entendu du type de visualisation utilisé. Il en résulte que pour des machines ayant des dispositifs de visualisation différents on utilise des microprocesseurs différents ou des microprocesseurs programmés différemment. Cette disposition n'est pas favorable à la fabrication en grande série.

L'invention remédie à cet inconvénient.

Elle est caractérisée en ce que le microprocesseur comporte une entrée d'identification recevant un signal représentant le type de visualisation de l'appareil électroménager et une sortie de commande de visualisation qui délivre, en fonction des signaux sur l'entrée d'identification, au dispositif de visualisation des signaux adaptés à ce dernier.

Dans le mode de réalisation préféré les signaux d'identification sont fournis par le dispositif de visualisation lui-même. On peut alors prévoir un seul connecteur entre le dispositif de visualisation et le microprocesseur, ce connecteur transmettant, d'une part, les signaux d'identification du dispositif vers le microprocesseur et, d'autre part, les signaux de commande du microprocesseur vers le dispositif de visualisation.

De préférence le dispositif de visualisation comporte sa propre alimentation en énergie électrique.

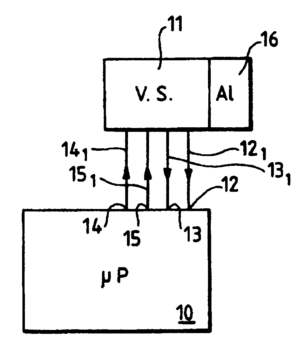

D'autres caractéristiques et avantages de l'invention apparaîtront avec la description de certains de ses modes de réalisation, celle-ci étant effectuée en se référant au dessin ci-annexé sur lequel la figure unique est un schéma d'un dispositif selon l'invention.

L'exemple qu'on va décrire en relation avec la figure se rapporte à un lave-vaisselle comportant un programmateur à microprocesseur 10.

Le programme en mémoire du microprocesseur permet la commande des diverses phases de fonctionnement de l'appareil. En outre le microprocesseur 10 est programmé pour permettre l'affichage de données se rapportant à l'appareil grâce à plusieurs types de dispositifs de visualisation 11.

Par exemple le microprocesseur 10 permet de commander quatre types de dispositifs de visualisation.

Le premier type comporte trois diodes électroluminescentes non montrées. La première diode indique, si elle est allumée, que l'appareil est en marche. La seconde diode, quand elle est allumée, signale le manque de sel et la troisième diode - également quand elle est allumée - indique à l'utilisateur qu'il doit remplir la réserve en produits de rinçage.

Le second type de dispositif d'affichage comporte vingt-deux diodes électroluminescentes (également non montrées). Six de ces diodes représentent le délai de départ différé, huit autres représentent le programme sélectionné et les huit dernières l'état de marche ou d'arrêt de l'appareil ou des anomalies. Bien entendu à côté de chacune des diodes est imprimée, gravée ou inscrite d'une autre manière, la représentation de l'information que fournit la diode.

Le troisième type de dispositif de visualisation fournit un affichage de type fluorescent (ou à cristaux liquides) à segments (non représentés). Cet affichage donne des indications en clair à l'utilisateur, par exemple le temps restant jusqu'à l'arrêt du fonctionnement de l'appareil.

Le quatrième type de dispositif de visualisation est également du type fluorescent mais destiné à l'affichage d'un diagnostic de test de l'appareil.

Le microprocesseur représenté comporte deux entrées 12 et 13 recevant des signaux numériques fournis par le dispositif de visualisation 11 par l'intermédiaire de conducteurs 12₁ et 13₁. Ce microprocesseur 10 comporte aussi deux sorties 14 et 15 reliées, par des conducteurs 14₁ et 15₁, à des entrées respectives du dispositif de visualisation 11.

Sur les entrées 12 et 13 sont appliqués des signaux binaires d'identification du dispositif de visualisation 11. Par exemple le nombre binaire 0 0 correspond au second type de dispositif d'affichage (22 diodes électroluminescentes), le nombre 1 0 correspond au troisième type de dispositif, c'est-à-dire un affichage de type fluorescent à segments, le nombre 0 1 au quatrième type d'affichage (affichage de diagnostic ou test) et le nombre 1 1 à un affichage à trois diodes électroluminescentes.

La sortie 14 du microprocesseur fournit au dispositif 11 les données qu'il doit afficher et la sortie 15 délivre les signaux d'horloge.

Enfin le dispositif 11 comporte sa propre source 16 d'alimentation en énergie électrique qui permet d'alimenter les organes d'affichage proprement dits, les circuits de commande, ainsi que le circuit délivrant les signaux d'identification appliqués aux entrées 12 et 13 du microprocesseur 10.

De préférence les conducteurs 12₁, 13₁, 14₁, et 15₁ font partie d'un câble unique.

En variante les entrées 12 et 13 ne sont pas connectées au dispositif 11.

Dans le mode de réalisation préféré, pour lequel le câble de connexion entre le dispositif 11 et le microprocesseur 10 comporte les conducteurs 12₁, 13₁, 14₁ et 15₁, le connecteur entre ce câble et l'entrée-sortie 12, 13, 14, 15 du microprocesseur est identique pour les divers types de visualisation.

Ainsi on peut réaliser plusieurs types d'appareils électroménagers qui diffèrent notamment par leur dispositif de visualisation mais qui, par ailleurs, présentent le même programmateur avec le même microprocesseur et le même connecteur.

## Revendications

1. Appareil électroménager à programmateur à microprocesseur (10) et dispositif de visualisation (11) de données se rapportant au fonctionnement de l'appareil et/ou au programme, caractérisé en ce que le microprocesseur comporte une entrée (12, 13) pour un signal d'identificatlon représentant le type de dispositif de visualisation, et une sortie (14, 15) délivrant des signaux de commande au dispositif de visualisation (11), ces signaux de commande étant fonction des signaux d'identification.

2. Appareil selon la revendication 1, caractérisé en ce que les signaux d'identification (12, 13) sont fournis par le dispositif de visualisation (11).

3. Appareil selon la revendication 1 ou 2, caractérisé en ce que le dispositif de visualisation (11) comporte une source autonome (16) d'alimentation en énergie électrique.

4. Appareil selon l'une quelconque des revendications précédentes, caractérisé en ce que le microprocesseur (10) fournit au dispositif de visualisation (11) des signaux de données et des signaux d'horloge.

5. Appareil selon l'une quelconque des revendications précédentes, caractérisé en ce que le signal d'identification est un signal binaire à deux bits.

6. Appareil selon la revendication 2, caractérisé en ce qu'il comporte un câble unique pour relier, d'une part, la sortie de commande (14, 15) du microprocesseur à l'entrée du dispositif de visualisation (11) et, d'autre part, les entrées d'identification (12, 13) du microprocesseur à une sortie du dispositif de visualisation (11).

7. Appareil selon la revendication 6, caractérisé en ce que plusieurs types de dispositif de visualisation étant connectables au microprocesseur (10), le connecteur d'entrée-sortie à ce microprocesseur est identique pour les divers types de dispositifs de visualisation.

8. Appareil selon l'une quelconque des revendications précédentes, caractérisé en ce que le dispositif de visualisation est au moins de l'un des types suivants : diode électroluminescente, affichage fluorescent, affichage de diagnostic, affichage à cristaux liquides.
